# EUROPEAN PATENT APPLICATION

(11) **EP 4 636 879 A1**
(43) Date of publication of application: **22.10.2025**
(21) Application number: 25162100.9
(22) Date of filing: 06.03.2025
(51) Int. Cl.: H01M 10/04, H01M 10/0587, H01M 50/10, H01M 50/595

(54) **SECONDARY BATTERY**

(30) Priority: 15.04.2024 KR 20240049803
(71) Applicant: SAMSUNG SDI CO., LTD., Yongin-si, Gyeonggi-do 17084 (KR)
(72) Inventor: KIM, JOUNG KU, 17084 Yongin-si, Gyeonggi-do (KR); KIM, JUNG HYUN, 17084 Yongin-si, Gyeonggi-do (KR); PARK, JUNG HYUN, 17084 Yongin-si, Gyeonggi-do (KR); LEE, DONG SUB, 17084 Yongin-si, Gyeonggi-do (KR); KANG, BONG GEUN, 17084 Yongin-si, Gyeonggi-do (KR)
(74) Representative: Gulde & Partner

(57) **Abstract**

One or more embodiments relates to a secondary battery capable of suppressing internal stress of the side of the electrode assembly, and capable of ensuring internal space of a case. The secondary battery according to one or more embodiments includes a case defining a space therein, an electrode assembly in the case and including a positive electrode plate, a negative electrode plate, and a separator wound in a cylindrical shape, and an adhesive part adhering and fixing a winding end of an outermost surface of the electrode assembly, and a cap assembly sealing the case.

## Description

### BACKGROUND

### 1. Field

Embodiments relate to a secondary battery.

### 2. Description of the Related Art

In general, a secondary battery includes an electrode assembly, a case, and a cap assembly. The electrode assembly may have a cylindrical shape. The case has a cylindrical shape, and may accommodate the electrode assembly and an electrolyte. The cap assembly may be coupled to the upper opening of the case to seal the case. The cap assembly may allow a current generated from the electrode assembly to flow to an external device.

The electrode assembly includes a positive electrode plate, a negative electrode plate, and a separator. The separator is located between the positive electrode plate and the negative electrode plate. The electrode assembly is formed by winding the positive electrode plate, the negative electrode plate, and the separator. The electrode assembly is formed in a cylindrical shape. The end of the electrode assembly is fixed with a sealing tape. The winding end of the electrode assembly is not unwound.

The information disclosed in this section is provided only for enhancement of understanding of the background of the disclosure and therefore it may contain information that does not form the prior art.

### SUMMARY

One or more embodiments relate to a secondary battery capable of suppressing internal stress of the side of the electrode assembly, and capable of ensuring internal space of a case

The secondary battery according to one or more embodiments includes a case defining a space therein, an electrode assembly in the case and including a positive electrode plate, a negative electrode plate, and a separator wound in a cylindrical shape, and an adhesive part adhering and fixing a winding end of an outermost surface of the electrode assembly, and a cap assembly sealing the case.

The adhesive part may be arranged along a boundary line of the winding end. The boundary line of the winding part may be parallel or essentially parallel to a virtual longitudinal center axis of the cylindrical shape, in which the separator is wound.

The adhesive part may include patterns spaced apart or a continuous pattern.

An end of the separator may be formed at an outermost part of the electrode assembly, and the adhesive part may be arranged along that end of the separator.

The adhesive part may include patterns at equal intervals.

The adhesive part may be selectively adhered only to regions of the winding end that are subject to increased mechanical stress. In such embodiments, the usage of adhesive material is reduced, while maintaining structural integrity.

The adhesive part may include patterns with a same length. The patterns may be the same size with regard to their length.

The adhesive part may be formed in a plurality of patterns. At least adjacent patterns may abut against each other. Alternatively or additionally, at least some adjacent patterns may partially overlap with each other to create one or more overlapping regions.

The adhesive part may be fixed to the outermost surface by fusion or bonding.

The adhesive part may be fixed to the outermost surface by heat fusion.

The adhesive part may include first adhesive parts respectively at a top and at a bottom of the electrode assembly, and a second adhesive part between the first adhesive parts. The top of the electrode assembly may be an end portion of the electrode assembly, which points to the cap. The bottom of the electrode assembly may be a further end portion of the electrode assembly pointing away from the cap.

The second adhesive part may extend along an extending direction of the winding end, wherein the second adhesive part is in a same direction as the first adhesive parts, or in a direction substantially perpendicular to the first adhesive parts.

### BRIEF DESCRIPTION OF THE DRAWINGS

The accompanying drawings, which are incorporated in this specification, illustrate embodiments, and serve to further illustrate the technical ideas of the disclosure in conjunction with the detailed description of embodiments that follows, and the disclosure is not to be construed as limited to what is shown in such drawings. In the drawings:
Fig. 1 is a sectional view showing a secondary battery according to one or more embodiments.
Fig. 2a is a partially dismantled perspective view showing the secondary battery according to one or more embodiments.
Fig. 2b is a dismantled perspective view showing a state in which an electrode plate and a tab are coupled.
Figs. 3 to 6 are perspective views the electrode assemblies of the secondary batteries according to embodiments.

### DETAILED DESCRIPTION

Embodiments are provided to more fully illustrate the disclosure to a person having ordinary skill in the art, the following embodiments may be modified in various other forms, and the scope of the disclosure is not limited to the following embodiments. The embodiments are provided to make the disclosure more faithful and complete and to completely convey the idea of the disclosure fully to those skilled in the art.

In the following drawings, the thickness or size of each layer is exaggerated for convenience and clarity of description and the same reference symbols in the drawings refer to the same elements. As used herein, the term "and/or" may include any one of the enumerated items and any combination of one or more thereof. As used herein, the term "connected" refers not only to direct connection between members A and B but also to indirect connection between members A and B with member C interposed therebetween.

The terms used in the specification are intended to describe specific embodiments and are not intended to limit the disclosure. As used herein, singular forms may include plural forms, unless the context clearly indicates otherwise. As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups.

While terms such as first and second are used herein to describe various members, parts, regions, layers, and/or portions, the members, the parts, the regions, the layers, and/or the portions are not to be limited by the terms. The terms are used only to distinguish one member, one part, one region, one layer, or one portion from another member, another part, another region, another layer, or another portion. Thus, a first member, a first part, a first region, a first layer, or a first portion hereinafter described may refer to a second member, a second part, a second region, a second layer, or a second portion without departing from the teachings of the disclosure.

Terms related to space, such as "beneath," "below," "lower," "above," and "upper," may be utilized to facilitate understanding of one element or feature shown in the drawings as different from another element or feature. The terms related to space are intended to facilitate understanding of the disclosure in various states of process or use and are not intended to limit the disclosure. For example, if an element or feature in a figure is inverted, an element or feature described as "beneath" or "below" becomes "above" or "upper." Thus, "beneath" is a concept that encompasses "above" or "below".

Hereinafter, a secondary battery according to one or more embodiments will be described with reference to the drawings.

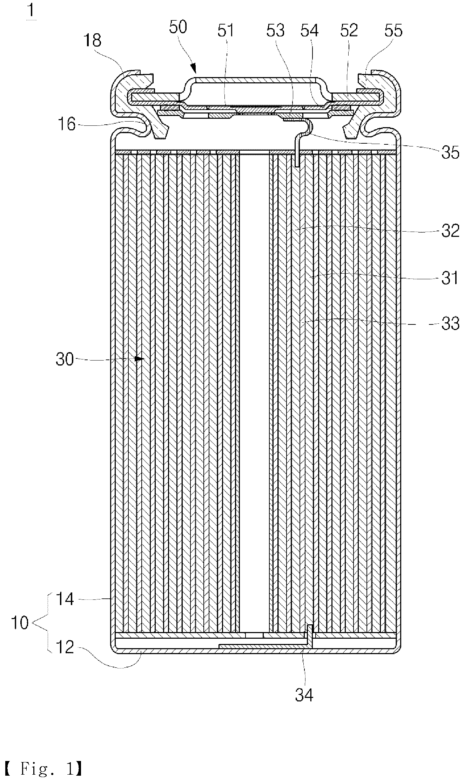

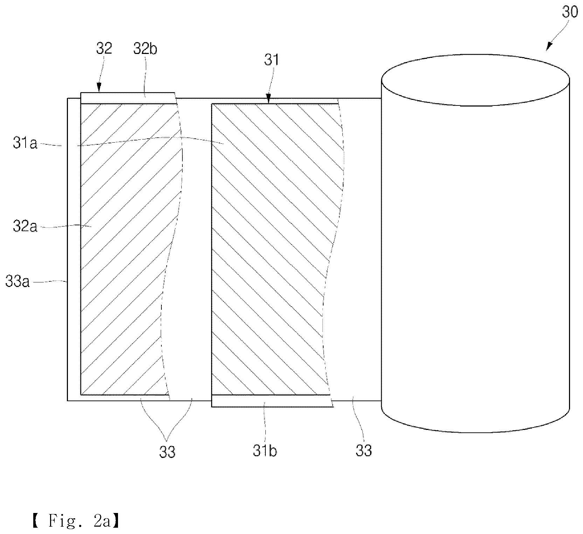

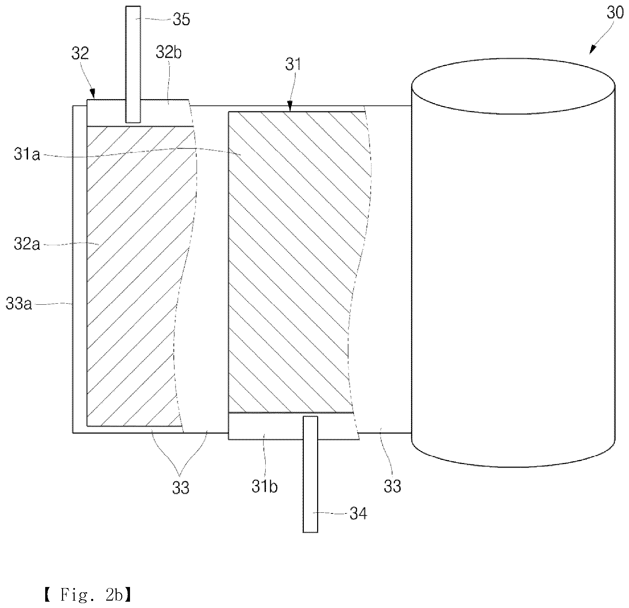

Fig. 1 is a sectional view showing a secondary battery according to one or more embodiments. Fig. 2a is a partially dismantled perspective view showing the secondary battery according to one or more embodiments. Fig. 2b is a dismantled perspective view showing a state in which an electrode plate and a tab are coupled.

Referring to Figs. 1, 2a, and 2b, the secondary battery 1 according to one or more embodiments may include a cylindrical case 10, an electrode assembly 30, and a cap assembly 50 for sealing the case 10. One end of the case 10 in the longitudinal direction is opened.

The case 10 may include a bottom part 12 and a side part 14. The bottom part 12 may be circular. The side part 14 may extend upwardly from the bottom part 12. The side part 14 is opened. During the manufacturing process of the secondary battery, the electrode assembly, and the electrolyte are accommodated in the case 10 through the opening of the case 10. The case may include steel, a steel alloy, nickel plated steel, nickel plated steel, aluminum, aluminum alloy, or an equivalent thereof.

A beading part 16 and a crimping part 18 are located on the side part 14. The cap assembly 50 may be fixed by the beading part 16 and the crimping part 18. The side part 14 may be bent concavely toward the inside of the case 10, and the beading part 16 may be formed. When the cap assembly 50 is assembled, the cap assembly 50 is supported by the beading part 16. After the cap assembly 50 is assembled, the end of the side part 14 may be bent toward the inside of the case 10, and the crimping part 18 may be formed. The cap assembly 50 may be fixed by the crimping part 18. The crimping part 18 and the electrode assembly 30 may be spaced apart from each other. In one or more embodiments, the crimping part 18 and the electrode assembly 30 are not in contact with each other.

The electrode assembly 30 may include a negative electrode plate 31 coated with a negative electrode active material (e.g., graphite, carbon, etc.) on a negative electrode current collector plate, a positive electrode plate 32 coated with a positive electrode active material (e.g., a transition metal oxide, such as LiCoO₂, LiNiO₂, LiMn₂O₄, etc.) on a positive electrode current collector plate, and a separator 33 positioned between the negative electrode plate 31 and the positive electrode plate 32 to reduce or prevent the likelihood of a short circuit therebetween while allowing the movement of lithium ions therethrough.

The negative electrode plate 31 may be a copper (Cu) or nickel (Ni) foil. The positive electrode plate 32 may be an aluminum (Al) foil. The separator 33 may be polyethylene (PE) or polypropylene (PP).

The negative electrode plate 31 may include a coating part 31a coated with the negative electrode active material, and an uncoated part 31b on which the negative electrode active material is not coated. The positive electrode plate 32 may include a coating part 32a coated with the positive electrode active material, and an uncoated part 32b on which the positive electrode active material is not coated.

A negative electrode tab 34 protruding downwardly to a corresponding length (e.g., predetermined length) may be welded to the uncoated part 31b of the negative electrode plate 31. Also, a positive electrode tab 35 protruding upwardly to a corresponding length (e.g., predetermined length) may be welded to the uncoated part 32b of the positive electrode plate 32. The negative electrode tab 34 may be welded to the bottom part 12 of the case 10. The positive electrode tab 35 may be welded to the cap assembly 50. The case 10 may be a negative electrode, and the cap assembly 50 may be a positive electrode. However, embodiments are not limited thereto. The tabs 34 and 35 might not be coupled to the uncoated parts 31b and 32b. The uncoated parts 31b and 32b may protrude upwardly or downwardly. The uncoated parts 31b and 32b may be electrically connected to the cap assembly 50 and the case 10 through a separate current collecting plate.

The negative electrode plate 31, the positive electrode plate 32, and the separator 33 may be wound in a cylindrical shape, and the electrode assembly 30 is formed. The electrode assembly may be accommodated in the case 10. In this case, the winding end of the outer surface of the electrode assembly 30 should not be unwound. The structure for this is described below.

The cap assembly 50 may include a safety vent 51, a cap up 52, and a cap down 53. The cap up 52 may be located on the safety vent 51. The cap down 53 may be located under the safety vent 51. In one or more embodiments, the cap assembly 50 may further include an insulating member 54 and an insulating gasket 55. The insulating member 54 may be located between the safety vent 51 and the cap down 53. A portion of the safety vent 51, other than the central portion thereof, does not contact the cap down 53. The cap assembly 50 and the case 10 may be insulated by the insulating gasket 55. A central portion of the safety vent 51 may contact the cap down 53. A portion of the safety vent 51 supported by the insulating member 54 may be spaced apart from the cap down 53. A notch may be formed in the safety vent 51. When the internal pressure of the case 10 is increased to more than or equal to a corresponding pressure (e.g., predetermined pressure), the notch may be broken, and gas may be discharged.

Hereinafter, the electrode assembly of the secondary battery according to one or more embodiments will be described in detail.

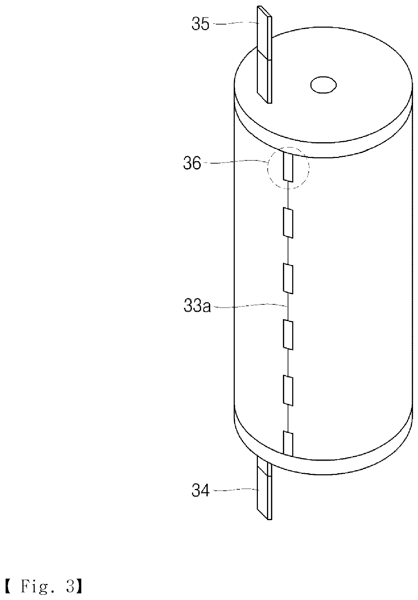

Fig. 3 is perspective view the electrode assemblies of the secondary battery according to one or more embodiments.

Referring to Fig. 3, the electrode assembly 30 may be wound. For example, an end portion 33a of the separator 33 may be located at an outermost portion of the electrode assembly. In one or more embodiments, the separator 33 may form an outer surface of the electrode assembly 30.

The end portion 33a may be a portion where winding is completed. When the end portion 33a is not fixed, the electrode assembly may be unwound. Thus, the end portion 33a may be adhered. For example, the end portion 33a may be adhered along a line (height direction of electrode assembly) of the end portion 33a. Thus, the likelihood of the end portion 33a being unwound may be reduced or prevented.

For example, the end portion 33a may be thermally fused. For example, the end portion 33a may be fused by contacting a bar-shaped heater. In one or more embodiments, the end portion 33a may be bonded by an adhesive. For example, the end portion 33a may be bonded by a plurality of adhesive parts 36. A plurality of adhesive parts 36 may be spaced apart from each other. A plurality of adhesive parts 36 may be formed in a pattern. In one or more embodiments, it is possible to reduce or prevent the likelihood of the end portion 33a being unwound. Also, even if a partial area of the end portion 33a is deformed, it may be suitably bonded. Also, even if any adhesive part is defective, the end portion 33a may be bonded by other adhesive parts. In one or more embodiments, the wound shape of the electrode assembly 30 may be maintained.

The end portion 33a may be fixed to the outermost portion of the electrode assembly 30 by the adhesive part 36. The electrode assembly 30 does not require a separate sealing (or finishing) tape. Stress due to a material difference (for example, a difference in elongation) between the separator 33 and the sealing tape may be prevented or reduced.

In one or more embodiments, the sealing tape is continuously bonded along the end. However, the end of the separator according to one or more embodiments is thermally fused. In one or more embodiments, the end is bonded by a plurality of adhesive parts 36. In one or more embodiments, even if the swelling of the electrode assembly 30 occurs, the internal stress caused by the sealing tape may be reduced.

Hereinafter, a secondary battery according to one or more other embodiments will be described.

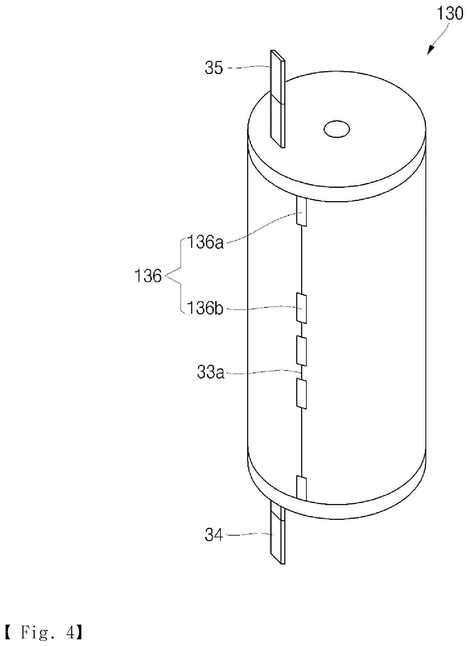

Fig. 4 is perspective view the electrode assemblies of the secondary battery according to one or more other embodiments.

Referring to Fig. 4, the end portion 33a of the separator may be located at an outermost portion of the electrode assembly 130.

The end portion 33a may be adhered. The end portion 33a may be selectively adhered. For example, the end portion 33a may be adhered only to an area that may be relatively easily unwound. For example, the end portion 33a may be thermally fused. For example, the end portion 33a may be fused by contacting a bar-shaped heater. In one or more embodiments, the end portion 33a may be bonded through the adhesive.

The adhesive part 136 may be formed. The adhesive part 136 may include a first adhesive part 136a and a second adhesive part 136b. The first adhesive part 136a is located on the upper end and the lower end of the electrode assembly 130. The second adhesive part 136b is located between the upper end and the lower end of the electrode assembly 130.

The end portion 33a may be relatively easily unwound from the upper and lower ends of the electrode assembly. In one or more embodiments, the first adhesive part 136a is located at the upper and lower ends of the electrode assembly 130.

The second adhesive part 136b may be located in the middle portion of the electrode assembly 130. The second adhesive part 136b may be formed in a plurality of patterns spaced apart from each other. The second adhesive part 136b may be spaced apart from the first adhesive part 136a. The second adhesive part 136b may adhere only a minor or minimum area, such that the end portion 33a is not unwound.

While the adhesive part 136 is formed to have a relatively minor or minimum area, the likelihood of the end portion 33a being released may be reduced or prevented.

Hereinafter, a secondary battery according to one or more other embodiments will be described.

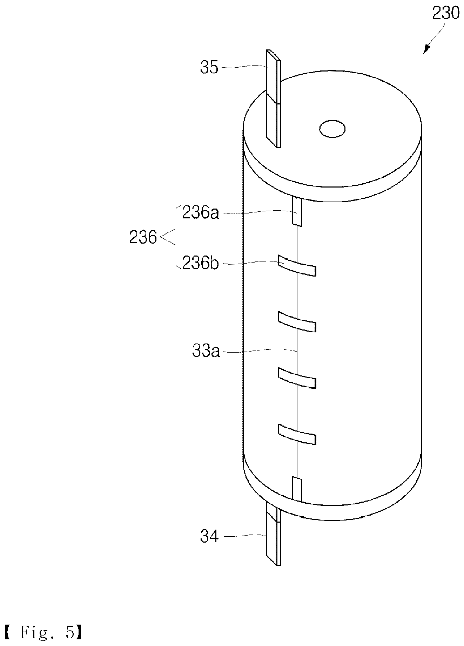

Fig. 5 is perspective view the electrode assemblies of the secondary battery according to one or more other embodiments.

The electrode assembly 230 may include the adhesive part 236. The adhesive part 236 may adhere the end portion 33a of the separator located on an outermost surface of the electrode assembly. For example, the end portion 33a may be thermally fused. For example, the end portion 33a may be fused by contacting a bar-shaped heater. In one or more embodiments, the end portion 33a may be bonded through an adhesive.

The adhesive part 236 may include a first adhesive part 236a and a second adhesive part 236b. The first adhesive part 236a may be located on the upper end and the lower end of the electrode assembly 230. The second adhesive part 236b may be located between the upper end and the lower end of the electrode assembly 230. The second adhesive part 236b may include a plurality of adhesive parts spaced apart from each other.

The end portion 33a may be relatively easily unwound from the upper and lower ends of the electrode assembly. In one or more embodiments, the first adhesive part 236a is located at the upper and lower ends of the electrode assembly 230.

The second adhesive part 236b may be located in the middle portion of the electrode assembly 230. The second adhesive part 236b may be formed in a plurality of patterns spaced apart from each other. The second adhesive part 236b may extend in a direction substantially perpendicular to the extending direction of the end portion 33a. For example, the extending direction of the second adhesive part 236b may be a vertical direction of the extending direction of the first adhesive part 236a. The end portion 33a may be relatively widely adhered to the vertical direction of the end portion 33a by the second adhesive part 236b. The likelihood of the end portion 33a being released may be reduced or prevented.

Hereinafter, a secondary battery according to one or more other embodiments will be described.

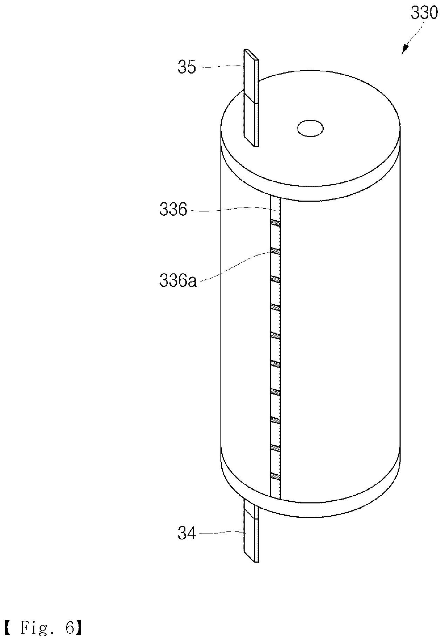

Fig. 6 is perspective view the electrode assemblies of the secondary battery according to one or more other embodiments.

The electrode assembly 330 may include the adhesive part 336. The adhesive part 336 may adhere the end portion 33a of the separator located on an outermost surface of the electrode assembly. For example, the end portion 33a may be thermally fused. For example, the end portion 33a may be fused by contacting a bar-shaped heater. In one or more embodiments, the end portion 33a may be bonded through an adhesive.

The adhesive part 336 may be continuously formed along the end portion 33a. The adhesive part 336 may be formed along the extending direction of the end portion 33a. The adhesive part 336 may be formed by a plurality of patterns, wherein adjacent patterns may partially overlap with each other. The adhesive part 336 may include one or more overlapping regions 336a. The adhesive part 336 may be formed on the entire end portion by the overlapping region 336a. The likelihood of the end portion 33a being unwound may be reduced or prevented.

The secondary battery according to one or more embodiments includes adhesive part. The adhesive part is formed by a fusion or bonding process. The adhesive part is formed in a plurality of patterns. In one or more embodiments, it is possible to reduce or prevent the likelihood of the winding end of the electrode assembly being unwound. The winding end may be fixed by the adhesive part. The secondary battery according to one or more embodiments may reduce or prevent internal stress generated by the sealing tape.

While the present disclosure has been described with reference to some embodiments shown in the drawings, these embodiments are merely illustrative, and it is to be understood that various modifications and equivalent other embodiments can be derived by those skilled in the art on the basis of the embodiments, while the technical scope of the present disclosure is defined by the claims.

## Claims

1. A secondary battery (1) comprising:
a case (10) defining a space therein;
an electrode assembly (30, 130, 230, 330) in the case (10) and comprising a positive electrode plate (32), a negative electrode plate (31), and a separator (33) wound in a cylindrical shape, and an adhesive part (36, 136, 236, 336) adhering and fixing a winding end of an outermost surface of the electrode assembly (30, 130, 230, 330); and
a cap assembly (50) sealing the case (10).

2. The secondary battery (1) as claimed in claim 1, wherein the adhesive part (36, 136, 236, 336) is arranged along a boundary line of the winding end.

3. The secondary battery (1) as claimed in claim 1 or 2,
wherein an end of the separator (33) forms at an outermost part of the electrode assembly (30, 130, 230, 330), and
wherein the adhesive part (36, 136, 236, 336) is arranged along the end of the separator (33).

4. The secondary battery (1) as claimed in any one of claims 1 to 3, wherein the adhesive part (336) comprises a continuous pattern.

5. The secondary battery (1) as claimed in claim 4, wherein the adhesive part (336) is formed in a plurality of patterns.

6. The secondary battery (1) as claimed in claim 5, wherein at least some adjacent patterns about each other.

7. The secondary battery (1) as claimed in claim 5, wherein at least some adjacent patterns partially overlap with each other to create one or more overlapping regions (336a).

8. The secondary battery (1) as claimed in any one of claims 1 to 3, wherein the adhesive part (36, 136, 236) comprises patterns spaced apart from each other.

9. The secondary battery (1) as claimed in claim 8, wherein the adhesive part (36, 136, 236) comprises patterns at equal intervals.

10. The secondary battery (1) as claimed in claim 8 or 9, wherein the adhesive part is selectively adhered only to regions of the winding end that are subject to increased mechanical stress.

11. The secondary battery (1) as claimed in any one of claims 1 to 10, wherein the adhesive part (36, 136, 236, 336) comprises patterns with a same length.

12. The secondary battery (1) as claimed in any one of claims 1 to 11, wherein the adhesive part (36, 136, 236, 336) is fixed to the outermost surface by fusion or bonding.

13. The secondary battery (1) as claimed in any one of claims 1 to 11, wherein the adhesive part (36, 136, 236, 336) is fixed to the outermost surface by heat fusion.

14. The secondary battery (1) as claimed in any one of claims 1 to 13, wherein the adhesive part (136, 236) comprises first adhesive parts (136a, 236a) respectively at a top and at a bottom of the electrode assembly (130, 230), and a second adhesive part (136b, 236b) between the first adhesive parts (136a, 236a).

15. The secondary battery (1) as claimed in claim 14, wherein the second adhesive part (136b, 236b) extends along an extending direction of the winding end, and
wherein the second adhesive part (136b, 236b) is in a same direction as the first adhesive parts (136a, 236a), or in a direction substantially perpendicular to the first adhesive parts (136a, 236a).
